(19) Europäisches Patentamt
European Patent Office
Office européen des brevets

(11) **EP 2 688 300 A1**

## (12) EUROPEAN PATENT APPLICATION

(43) Date of publication:
**22.01.2014 Bulletin 2014/04**

(51) Int Cl.:
**H04N 7/26** $^{(2006.01)}$

(21) Application number: **13157136.6**

(22) Date of filing: **28.02.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.06.2012 US 201261666830 P**

(71) Applicant: **BlackBerry Limited**
**Waterloo, ON N2K 0A7 (CA)**

(72) Inventors:
• **Ji, Tianying**
**Mississauga, Ontario L4W 0B5 (CA)**

• **Yu, Xiang**
**Kitchener, Ontario N2N 3R5 (CA)**
• **He, Dake**
**Waterloo, Ontario N2L 3W8 (CA)**

(74) Representative: **Patel, Binesh**
**Barker Brettell LLP**
**100 Hagley Road**
**Edgbaston**
**Birmingham West Midlands**
**B16 8QQ (GB)**

(54) **Position-based context selection for greater-than-one flag decoding and encoding**

(57) Methods of encoding and decoding for video data for encoding or decoding a sequence of greater-than-one flags for a coefficient group are provided. Context-based encoding and decoding selects a context for encoding or decoding the greater-than-one flag based upon the position of the greater-than-one flag in the sequence of greater-than-one flags. Selection of the context may also be based upon the position of the last-non-zero coefficient in the coefficient group.

200

202 Select context set

314 For each greater-than-one flag in the sequence of greater-than-one flags, select a context from the context set based on the position of the greater-than-one flag in the sequence, and based on the position of the last significant coefficient in the scan order

208 Decode the sequence of greater-than-one flags using the selected context(s)

**FIG. 4**

EP 2 688 300 A1

**Description**

## CROSS-REFERENCE TO RELATED APPLICATIONS

The present application claims priority to U.S. provisional patent application serial no. 61/666,830, filed June 30, 2012, the contents of which are hereby incorporated by reference.

## COPYRIGHT NOTICE

A portion of the disclosure of this document and accompanying materials contains material to which a claim for copyright is made. The copyright owner has no objection to the facsimile reproduction by anyone of the patent document or the patent disclosure, as it appears in the Patent and Trademark Office files or records, but reserves all other copyright rights whatsoever.

FIELD

The present application generally relates to data compression and, in particular, to methods and devices for context modeling when encoding and decoding residual video data.

## BACKGROUND

Data compression occurs in a number of contexts. It is very commonly used in communications and computer networking to store, transmit, and reproduce information efficiently. It finds particular application in the encoding of images, audio and video. Video presents a significant challenge to data compression because of the large amount of data required for each video frame and the speed with which encoding and decoding often needs to occur. The current state-of-the-art for video encoding is the ITU-T H.264/AVC video coding standard. It defines a number of different profiles for different applications, including the Main profile, Baseline profile and others. A next-generation video encoding standard is currently under development through a joint initiative of MPEG-ITU termed High Efficiency Video Coding (HEVC)/H.265.

There are a number of standards for encoding/decoding images and videos, including H.264, that use block-based coding processes. In these processes, the image or frame is divided into blocks, typically 4x4 or 8x8, and the blocks are spectrally transformed into coefficients, quantized, and entropy encoded. In many cases, the data being transformed is not the actual pixel data, but is residual data following a prediction operation. Predictions can be intra-frame, *i. e.* block-to-block within the frame/image, or inter-frame, *i. e.* between frames (also called motion prediction). It is expected that HEVC/H.265 will also have these features.

When spectrally transforming residual data, many of these standards prescribe the use of a discrete cosine transform (DCT) or some variant thereon. The resulting DCT coefficients are then quantized using a quantizer to produce quantized transform domain coefficients, or indices.

The block or matrix of quantized transform domain coefficients (sometimes referred to as a "transform unit") is then entropy encoded using a particular context model. In H.264/AVC and in the current development work for HEVC/H. 265, the quantized transform coefficients are encoded by (a) encoding a last significant coefficient position indicating the location of the last non-zero coefficient in the transform unit, (b) encoding a significance map indicating the positions in the transform unit (other than the last significant coefficient position) that contain non-zero coefficients, (c) encoding the magnitudes of the non-zero coefficients, and (d) encoding the signs of the non-zero coefficients. This encoding of the quantized transform coefficients often occupies 30-80% of the encoded data in the bitstream.

## BRIEF SUMMARY

The present application describes methods and encoders/decoders for encoding and decoding video.

In a first aspect, the present application describes a method of reconstructing greater-than-one flags in a video decoder from a bitstream of encoded video data for a coefficient group in a transform unit. The method includes selecting a context set for decoding a sequence of greater-than-one flags for that coefficient group; and for each greater-than-one flag in the sequence, selecting a context within the selected context set based upon a position of that greater-than-one flag in the sequence, and decoding that greater-than-one flag from the encoded video data using the selected context.

In another aspect, the present application describes a method of encoding video data in a video encoder by encoding greater-than-one flags for a coefficient group in a transform unit. The method includes selecting a context set for encoding a sequence of greater-than-one flags for that coefficient group; and, for each greater-than-one flag in the sequence, selecting a context within the selected context set based upon a position of that greater-than-one flag in the sequence, and encoding that greater-than-one flag from the encoded video data using the selected context.

In a further aspect, the present application describes encoders and decoders configured to implement such methods of encoding and decoding.

In yet a further aspect, the present application describes non-transitory computer-readable media storing computer-executable program instructions which, when executed, configured a processor to perform the described methods of encoding and/or decoding.

Other aspects and features of the present application will be understood by those of ordinary skill in the art from a review of the following description of examples in conjunction with the accompanying figures.

## BRIEF DESCRIPTION OF THE DRAWINGS

Reference will now be made, by way of example, to the accompanying drawings which show example embodiments of the present application, and in which:

Figure 1 shows, in block diagram form, an encoder for encoding video;

Figure 2 shows, in block diagram form, a decoder for decoding video;

Figure 3 shows an example process for reconstructing greater-than-one flags in a video decoder;

Figure 4 shows another example process for reconstructing greater-than-one flags is a video decoder;

Figure 5 shows a finite state machine for determining context in coding greater-than-one flags;

Figure 6 shows a simplified block diagram of an example embodiment of an encoder; and

Figure 7 shows a simplified block diagram of an example embodiment of a decoder.

Similar reference numerals may have been used in different figures to denote similar components.

## DESCRIPTION OF EXAMPLE EMBODIMENTS

In the description that follows, some example embodiments are described with reference to the H.264 standard for video coding and/or the developing HEVC/H.265 standard. Those ordinarily skilled in the art will understand that the present application is not limited to H.264/AVC or HEVC/H.265 but may be applicable to other video coding/decoding standards, including possible future standards, multi-view coding standards, scalable video coding standards, and reconfigurable video coding standards.

In the description that follows, when referring to video or images the terms frame, picture, slice, tile and rectangular slice group may be used somewhat interchangeably. Those of skill in the art will appreciate that, in the case of the H.264 standard, a frame may contain one or more slices. The term "frame" may be replaced with "picture" in HEVC/H.265. Other terms may be used in other video coding standards. It will also be appreciated that certain encoding/decoding operations might be performed on a frame-by-frame basis, some are performed on a slice-by-slice basis, some picture-by-picture, some tile-by-tile, and some by rectangular slice group, depending on the particular requirements or terminology of the applicable image or video coding standard. In any particular embodiment, the applicable image or video coding standard may determine whether the operations described below are performed in connection with frames and/or slices and/or pictures and/or tiles and/or rectangular slice groups, as the case may be. Accordingly, those ordinarily skilled in the art will understand, in light of the present disclosure, whether particular operations or processes described herein and particular references to frames, slices, pictures, tiles, rectangular slice groups are applicable to frames, slices, pictures, tiles, rectangular slice groups, or some or all of those for a given embodiment. This also applies to transform units, coding units, groups of coding units, etc., as will become apparent in light of the description below.

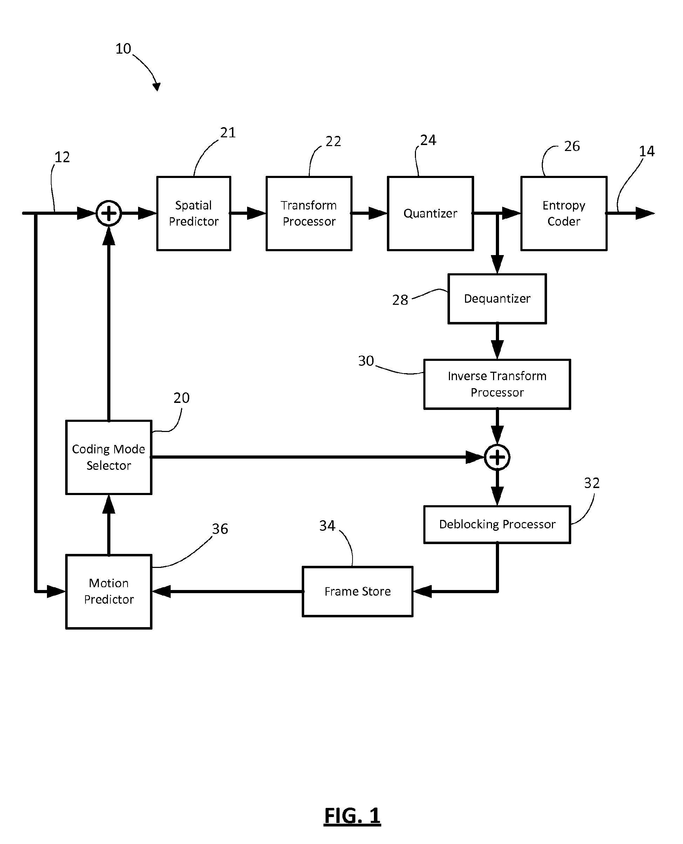

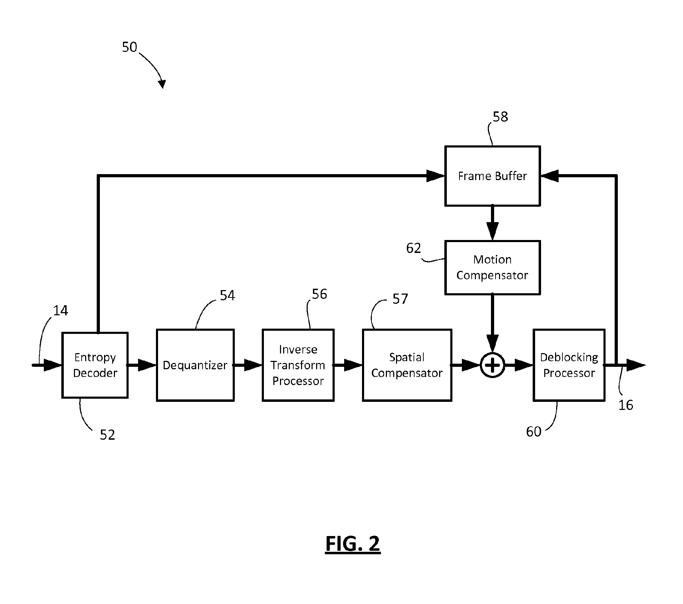

Reference is now made to Figure 1, which shows, in block diagram form, an encoder 10 for encoding video. Reference is also made to Figure 2, which shows a block diagram of a decoder 50 for decoding video. It will be appreciated that the encoder 10 and decoder 50 described herein may each be implemented on an application-specific or general purpose computing device, containing one or more processing elements and memory. The operations performed by the encoder 10 or decoder 50, as the case may be, may be implemented by way of application-specific integrated circuit, for example, or by way of stored program instructions executable by a general purpose processor. The device may include additional software, including, for example, an operating system for controlling basic device functions. The range of devices and platforms within which the encoder 10 or decoder 50 may be implemented will be appreciated by those ordinarily skilled in the art having regard to the following description.

The encoder 10 receives a video source 12 and produces an encoded bitstream 14. The decoder 50 receives the encoded bitstream 14 and outputs a decoded video frame 16. The encoder 10 and decoder 50 may be configured to operate in conformance with a number of video compression standards. For example, the encoder 10 and decoder 50 may be H.264/AVC compliant. In other embodiments, the encoder 10 and decoder 50 may conform to other video compression standards, including evolutions of the H.264/AVC standard, like HEVC/H.265.

The encoder 10 includes a spatial predictor 21, a coding mode selector 20, transform processor 22, quantizer 24, and entropy encoder 26. As will be appreciated by those ordinarily skilled in the art, the coding mode selector 20 determines the appropriate coding mode for the video source, for example whether the subject frame/slice is of I, P, or B type, and whether particular coding units (e.g. macroblocks, coding units, etc.) within the frame/slice are inter or intra coded. The transform processor 22 performs a transform upon the spatial domain data. In particular, the transform processor 22 applies a block-based transform to convert spatial domain data to spectral components. For example, in many embodiments a discrete cosine transform (DCT) is used. Other transforms, such as a discrete sine transform or others may be used in some instances. The block-based transform is performed on a coding unit, macroblock or sub-block basis, depending on the size of the macroblocks or coding units. In the H.264 standard, for example, a typical 16x16 macroblock contains sixteen 4x4 transform blocks and the DCT process is performed on the 4x4 blocks. In some cases, the transform blocks may be 8x8, meaning there are four transform blocks per macroblock. In yet other cases, the transform blocks may be other sizes. In some cases, a 16x16 macroblock may include a non-overlapping combination of 4x4 and 8x8 transform blocks.

Applying the block-based transform to a block of pixel data results in a set of transform domain coefficients. A "set" in this context is an ordered set in which the coefficients have coefficient positions. In some instances the set of transform domain coefficients may be considered as a "block" or matrix of coefficients. In the description herein the phrases a "set of transform domain coefficients" or a "block of transform domain coefficients" are used interchangeably and are meant to indicate an ordered set of transform domain coefficients.

The set of transform domain coefficients is quantized by the quantizer 24. The quantized coefficients and associated information are then encoded by the entropy encoder 26.

The block or matrix of quantized transform domain coefficients may be referred to herein as a "transform unit" (TU). In some cases, the TU may be non-square, e.g. a non-square quadrature transform (NSQT).

Intra-coded frames/slices (i.e. type I) are encoded without reference to other frames/slices. In other words, they do not employ temporal prediction. However intra-coded frames do rely upon spatial prediction within the frame/slice, as illustrated in Figure 1 by the spatial predictor 21. That is, when encoding a particular block the data in the block may be compared to the data of nearby pixels within blocks already encoded for that frame/slice. Using a prediction algorithm, the source data of the block may be converted to residual data. The transform processor 22 then encodes the residual data. H.264, for example, prescribes nine spatial prediction modes for 4x4 transform blocks. In some embodiments, each of the nine modes may be used to independently process a block, and then rate-distortion optimization is used to select the best mode.

The H.264 standard also prescribes the use of motion prediction/compensation to take advantage of temporal prediction. Accordingly, the encoder 10 has a feedback loop that includes a de-quantizer 28, inverse transform processor 30, and deblocking processor 32. The deblocking processor 32 may include a deblocking processor and a filtering processor. These elements mirror the decoding process implemented by the decoder 50 to reproduce the frame/slice. A frame store 34 is used to store the reproduced frames. In this manner, the motion prediction is based on what will be the reconstructed frames at the decoder 50 and not on the original frames, which may differ from the reconstructed frames due to the lossy compression involved in encoding/decoding. A motion predictor 36 uses the frames/slices stored in the frame store 34 as source frames/slices for comparison to a current frame for the purpose of identifying similar blocks. Accordingly, for macroblocks or coding units to which motion prediction is applied, the "source data" which the transform processor 22 encodes is the residual data that comes out of the motion prediction process. For example, it may include information regarding the reference frame, a spatial displacement or "motion vector", and residual pixel data that represents the differences (if any) between the reference block and the current block. Information regarding the reference frame and/or motion vector may not be processed by the transform processor 22 and/or quantizer 24, but instead may be supplied to the entropy encoder 26 for encoding as part of the bitstream along with the quantized coefficients.

Those ordinarily skilled in the art will appreciate the details and possible variations for implementing video encoders.

The decoder 50 includes an entropy decoder 52, dequantizer 54, inverse transform processor 56, spatial compensator 57, and deblocking processor 60. The deblocking processor 60 may include deblocking and filtering processors. A frame buffer 58 supplies reconstructed frames for use by a motion compensator 62 in applying motion compensation. The spatial compensator 57 represents the operation of recovering the video data for a particular intra-coded block from a previously decoded block.

The bitstream 14 is received and decoded by the entropy decoder 52 to recover the quantized coefficients. Side information may also be recovered during the entropy decoding process, some of which may be supplied to the motion compensation loop for use in motion compensation, if applicable. For example, the entropy decoder 52 may recover motion vectors and/or reference frame information for inter-coded macroblocks.

The quantized coefficients are then dequantized by the dequantizer 54 to produce the transform domain coefficients, which are then subjected to an inverse transform by the inverse transform processor 56 to recreate the "video data". It will be appreciated that, in some cases, such as with an intra-coded macroblock or coding unit, the recreated "video data" is the residual data for use in spatial compensation relative to a previously decoded block within the frame.

The spatial compensator 57 generates the video data from the residual data and pixel data from a previously decoded block. In other cases, such as inter-coded macroblocks or coding units, the recreated "video data" from the inverse transform processor 56 is the residual data for use in motion compensation relative to a reference block from a different frame. Both spatial and motion compensation may be referred to herein as "prediction operations".

The motion compensator 62 locates a reference block within the frame buffer 58 specified for a particular inter-coded macroblock or coding unit. It does so based on the reference frame information and motion vector specified for the inter-coded macroblock or coding unit. It then supplies the reference block pixel data for combination with the residual data to arrive at the reconstructed video data for that coding unit/macroblock.

A deblocking/filtering process may then be applied to a reconstructed frame/slice, as indicated by the deblocking processor 60. After deblocking/filtering, the frame/slice is output as the decoded video frame 16, for example for display on a display device. It will be understood that the video playback machine, such as a computer, set-top box, DVD or Blu-Ray player, and/or mobile handheld device, may buffer decoded frames in a memory prior to display on an output device.

It is expected that HEVC/H.265-compliant encoders and decoders will have many of these same or similar features.

The present application describes example processes and devices for encoding and decoding transform coefficients of a transform unit. The non-zero coefficients are identified by a significance map. A significance map is a block, matrix, group, or set of flags that maps to, or corresponds to, a transform unit or a defined unit of coefficients (e.g. several transform units, a portion of a transform unit, or a coding unit). Each flag indicates whether the corresponding position in the transform unit or the specified unit contains a non-zero coefficient or not. In existing standards, these flags may be referred to as significant-coefficient flags. In existing standards, there is one flag per coefficient from the DC coefficient to the last significant coefficient in a scan order, and the flag is a bit that is zero if the corresponding coefficient is zero and is set to one if the corresponding coefficient is non-zero. The term "significance map" as used herein is intended to refer to a matrix or ordered set of significant-coefficient flags for a transform unit, as will be understood from the description below, or a defined unit of coefficients, which will be clear from the context of the applications.

The significance map may be converted to a vector in accordance with the scan order (which may be vertical, horizontal, diagonal, zig-zag, or any other scan order permitted under the applicable standard). The scan is typically done in "reverse" order, i.e. starting with the last significant coefficient and working back through the significant map in reverse direction until the significant-coefficient flag in the upper-left corner at [0,0] is reached. In the present description, the term "scan order" is intended to mean the order in which flags, coefficients, or groups, as the case may be, are processed and may include orders that are referred to colloquially as "reverse scan order".

Each significant-coefficient flag is then entropy encoded using the applicable context-adaptive coding scheme. For example, in many applications a context-adaptive binary arithmetic coding (CABAC) scheme may be used.

The magnitudes for those non-zero coefficients may then be encoded. In some standards, magnitudes (*i.e.* levels) are encoded by encoding one or more level flags. If additional information is required to signal the magnitude of a quantized transform domain coefficient, then remaining-level data may be encoded. In one example implementation, the levels may be encoded by first encoding a sequence of greater-than-one flags indicating which non-zero coefficients having an absolute value level greater than one. Greater-than-two flags may then be encoded to indicate which non-zero coefficients have a level greater than two. Remaining level data may then be encoded for any of the coefficients having an absolute value greater than two. The value encoded in the remaining-level integer may be the actual value minus three. The sign of each of the non-zero coefficients is also encoded. Each non-zero coefficient has a sign bit indicating whether the level of that non-zero coefficient is negative or positive.

In some implementations a transform unit may be partitioned into contiguous and non-overlapping coefficient groups. The coefficients within each coefficient group may be processed in a scan order, e.g. diagonal, before processing the next coefficient group in a group-scan order (which may also be diagonal, or any other selected order). Coefficient groups may be square, e.g. 4x4, or non-square, e.g. 2x8, 8x2, *etc.* In some cases, coefficient groups may vary in size and may be oriented/aligned with a scan order, e.g. diagonally.

Coefficient groups sometimes may be used to implement multi-level coding, such as through the use of significant-coefficient group flags. A significant-coefficient group flag indicates whether the associated coefficient group should be presumed to have non-zero coefficients or whether all coefficients may be presumed to be zero (and thus no further data need be encoded/decoded for that coefficient group).

Note that in some embodiments coefficient groups may be non-square. For example, in some cases, rectangular coefficient groups may be defined. The coefficient group shape may depend on the scan order in some embodiments. For example, diagonal scans may use square coefficient groups, vertical or horizontal scans may use rectangular coefficient groups.

The use of multi-level significance maps facilitates the modular processing of residual data for encoding and decoding.

Context level coding and decoding may be done in sets or groups of 16 coefficients. This corresponds well with the block-based coefficient group encoding and decoding of the significance map, and the multi-level scan order used in that process.

Like the encoding of the significance map, the encoding of the coefficient levels (e.g. greater-than-one flag, greater-than-two flag, and absolute-value-less-three), in some cases relies upon context modeling. Current work on HEVC/H.265 proposes that the context-coded syntax elements, such as greater-than-one flags and greater-than-two flags, be limited to a maximum number of such flags per coefficient group. For example, the maximum number of greater-than-one flags may be eight, and the maximum number of greater-than-two flags may be one. In the case of greater-than-two flags, there may be a single context for coding the greater-than-two flag. However, in the case of the greater-than-one flags, context determination may be complex and under current proposals may pose problems for parallelism.

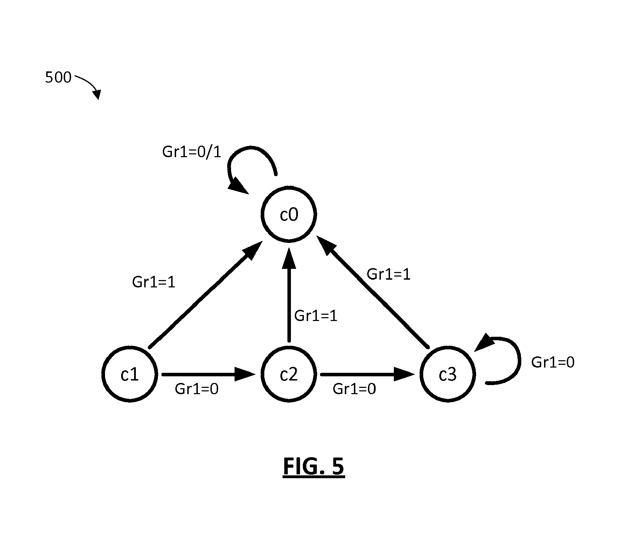

Reference is now made to Figure 5, which shows a finite state machine 500 for context determination in the encoding or decoding of a greater-than-one flag. It will be noted that the context initially used for coding of the first greater-than-one flag (for example, the first in a coefficient group) is context c1. The value of that flag is used to determine the context for coding the next greater-than-one flag in the sequence of greater-than-one flags. If the first flag was Gr1 = 0, then the next context is determined to be c2. If, however, the greater-than-one flag was Gr1 = 1, then the state machine transitions to context state c0.

It will be noted that the context determination is based on the value of the immediately preceding greater-than-one flag in the sequence. This poses a problem for parallelism and, in some cases, processor throughput. This model has been proposed because the value of the immediately preceding greater-than-one flag is a statistically significant predictor of the value of the current greater-than-one flag.

The present application discloses other parameters or factors that may be used for determining context for coding greater-than-one flags that are correlated to the likelihood that the greater-than-one flag is 0 (or 1). These factors or parameters avoid the data dependency of the finite state machine 500 shown in Figure 5 that poses problems for parallelism in processing greater-than-one flags.

The greater-than-one flags for a coefficient group are coded as a sequence. The order of the flags in the sequence is based on the order in which the non-zero coefficients appear in scan order within the coefficient group. If there are maximum of eight greater-than-one flags for a coefficient group, then the sequence will contain up to eight greater-than-one flags, which may be indexed as 0, 1, 2, ..., 7. That is, each flag's position in the sequence may be identified by an index, idx, where idx = 0, 1, 2, ..., 7.

In one embodiment, the context selected for encoding/decoding a greater-than-one flag may depend on the location of the non-zero coefficient corresponding to the greater-than-one flag in the scan order. That is, the context for encoding and decoding the greater-than-one flag may depend on its location in the block.

In a further embodiment, the context may depend on the position of the greater-than-one flag in the sequence of greater-than-one flags. For example, the context may depend on the index idx.

In another embodiment, a factor or parameter used in context determination for coding greater-than-one flags may be the position of the last non-zero coefficient in the coefficient group. Empirical testing shows that the position of the last non-zero coefficient in the coefficient group correlates to an estimate of the number of trailing ones from that non-zero coefficient. In other words, the position of the last non-zero coefficient correlates to the likely number of subsequent gr1=0 flags. Therefore, the position of the last non-zero coefficient can be a factor in determining context for coding of those greater-than-one flags. In this discussion, the "position of the last non-zero coefficient" refers to the position of the last non-zero coefficient in the scan order.

In yet another embodiment, a factor or parameter used in context determination for coding greater-than-one flags may be the length of the zero run (if any) immediately preceding the current greater-than-one flag in scan order. That is, the likelihood of the greater-than-one flag being 0 or 1 may be correlated to whether there is a zero coefficient (i.e. significant-coefficient flag = 0) immediately preceding the current greater-than-one flag in the scan order and, if so, the length of the run of consecutive zero coefficients (significant-coefficient flags = 0) preceding the current greater-than-one flag.

As an example, if the coefficients of a coefficient group are (in scan order from bottom right to top left):

    0, 0, 0, 0, 1, 0, 1, 0, 0, 0, 1, 0, 0, 2, 1, 3

then the non-zero coefficients 1, 1, 1, 2, 1, 3 will each result in coding of a greater-than-one flag. The context for coding each greater-than-one flag may depend on the number of consecutive zeros preceding the greater-than-one flag. In the above example, the zero runs corresponding to the greater-than-one flags are: 4, 1, 3, 2, 0, 0. These values may be factors in determining context for coding the corresponding greater-than-one flag.

In yet another embodiment, another possible factor or parameter that may be used in determining context for coding of greater-than-one flags is the number of non-zero coefficients in the coefficient group. A greater number of non-zero coefficients in the coefficient group is correlated to a higher likelihood that coefficients are greater than one. Note, however, that the use of the number of non-zero may pose issues for current proposed designs of rate-distortion optimized quantization at the encoder. Nevertheless, if RDOQ is not implemented (or is turned off), or if RDOQ is redesigned, then the number of non-zero coefficients is information available for greater-than-one context determination. Possible RDOQ redesigns may include incorporating the different greater-than-one context possibilities into the RDOQ using a trellis. Another possible redesign is to use speculative coding.

In some embodiments, more than one of the foregoing factors or parameters may be used in determining context for coding greater-than-one flags. For example, the context determination may take into account both the position of the last non-zero in the coefficient group and the position of the greater-than-one flag in the sequence of greater-than-one flags. In another example, the context determination may take into account the position of the last non-zero in the coefficient group and the number of zero coefficients preceding the current greater-than-one flag in the scan order. In one further example, the context determination may take into account the length of the zero run immediately preceding the current greater-than-one flag in scan order and the position of the greater-than-one flag in the sequence of greater-than-one flags. Other combinations are also possible.

It has also been observed that the likelihood of greater-than-one coefficients is correlated to whether a greater-than-one coefficient was encountered in the preceding coefficient group. In some cases, the correlation is based on how many greater-than-one coefficients were encountered in the preceding coefficient group. For example, if more than a threshold number of greater-than-one flags were observed in the previous coefficient group, then it may result in selection of a different context set than would otherwise be used.

It will be understood that in determining context for greater-than-one flag coding there may be two or more context sets, which might or might not overlap. Each context set contains a set of contexts, and one of those contexts is used of the coding of each greater-than-one flag. The context set used for coding the greater-than-one flags of coefficient group is selected using a factor or parameter or threshold test. The context set selection may be based upon the number of greater-than-one flags observed in the previous coefficient group, for example. In another example, the context set selection may be based upon the position of the coefficient group in the transform unit. In some cases, the context set selection may also be dependent upon whether the coefficient group contains luma data or chroma data.

Once a context set is selected, that set of contexts is used for coding the greater-than-one flags of that coefficient group. The example factors or parameters described above for determining context may then be used to determine which context from the context set to use for coding each greater-than-one flag. As mentioned earlier, the example parameters and factors described above avoid data dependency amongst the greater-than-one flags so as to enable parallelism in context determination and, thus, greater-than-one flag coding.

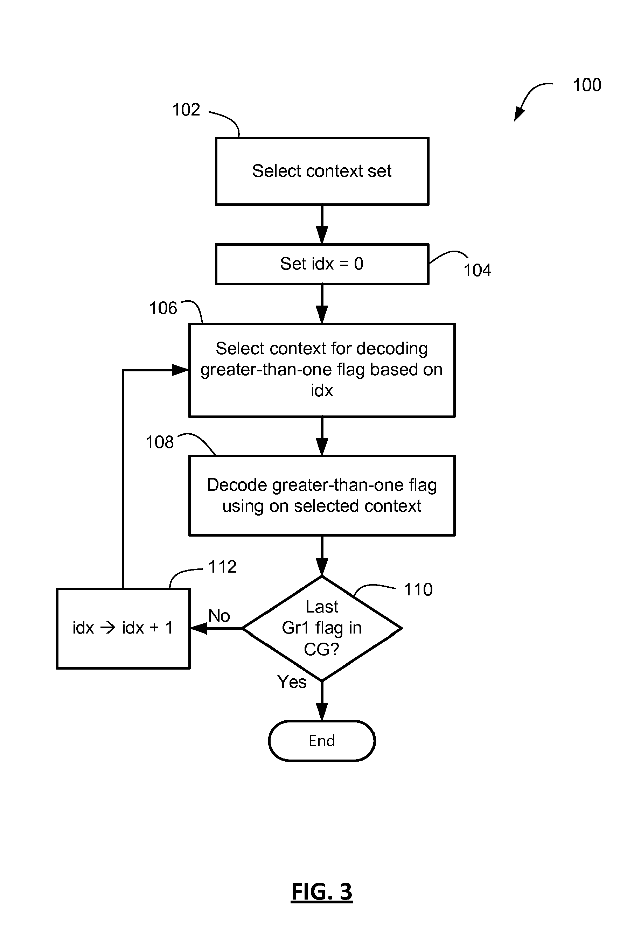

Reference is now made to Figure 3, which shows, in flowchart form, an example process 100 for reconstructing greater-than-one flags in a video decoder from a bitstream of encoded video data for a coefficient group in a transform unit. It will be appreciated that the present process 100 presumes that the significant-coefficient flags of the coefficient group have been decoded. The example process 100 may include selecting a context set in operation 102. In some implementations, there may be only one context set, in which case operation 102 may be eliminated.

In operation 104, an index, idx, or count of greater-than-one flags is initialized (in this example, the index is initialized as idx = 0).

Operation 106 involves selecting a context from the context set for decoding the current greater-than-one flag. The context is selected based upon the idx. That is, the selection of the context is based upon the position of the greater-than-one flag in the sequence of greater-than-one flags for this coefficient group. Put another way, the context is selected based upon the number of greater-than-one flags preceding the current greater-than-one flag in the sequence.

In one example implementation, in which there are four contexts, the context selection based on position in the sequence may be made in accordance with:

[c1, c2, c3, c3, c3, c0, c0, c0]

The greater-than-one flag is then decoded from the bitstream based upon the selected context in operation 108. This may further include updating the selected context based upon the value of the decoded flag. In operation 110, the decoder determines whether this is the last greater-than-one flag of the sequence and, if not, then in operation 112 the index idx is incremented and the decoder returns to operation 106.

It will be appreciated that, for ease of illustration, operations 106, 108, 110, and 112 are depicted in Figure 3 as a loop in which the context for decoding each greater-than-one flag is determined after decoding of the previous greater-than-one flag in the loop, but in other embodiments, the context determination does not need to be in the loop and may be determined in parallel for all greater-than-one flags of the sequence before the decoding operation.

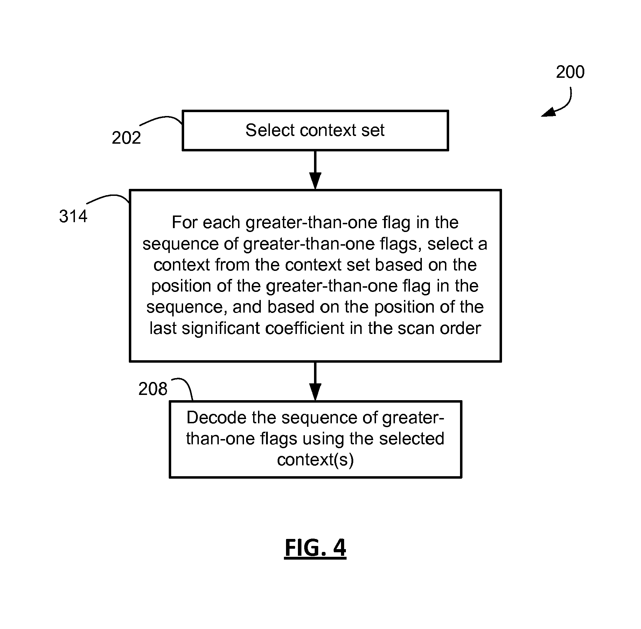

Figure 4 shows another example process 200 for reconstructing greater-than-one flags in a video decoder from a bitstream of encoded video data for a coefficient group in a transform unit. It will be appreciated that the present example process 200 presumes that the significant-coefficient flags of the coefficient group have been decoded. The example process 200 shown in flowchart form in Figure 4 illustrates the parallel determination of context prior to decoding of the greater-than-one flags.

The example process 200 may include selecting a context set in operation 202. In some embodiments, context set selection may be based upon the position of the coefficient group in the transform unit, the number of greater-than-one flags observed in the preceding coefficient group, or both.

Having decoded the significance map, the decoder knows the number of non-zero coefficients in the coefficient group and, thus, the number of greater-than-one flags encoded in the bitstream. In operation 206, the decoder selects the context for decoding each of the greater-than-one flags in the sequence of greater-than-one flags. In particular, for each greater-than-one flag, a context from the context set is selected based upon the position of the greater-than-one flag in the sequence and based upon the position of the last significant coefficient in the scan order (*i.e.* in the coefficient group).

Once the contexts for decoding the greater-than-one flags of the sequence are selected, then in operation 208 each greater-than-one flag is decoded using its selected context.

Below is an example table for determining context based on position of the greater-than-one flag in the sequence and the position of the last non-zero coefficient in the coefficient group.

Table 1: Context selection for coding greater-than-one flags

| Position of the last NZ | Context selection for Gr1,( bin0 to bin7) | | | | | | | |
|---|---|---|---|---|---|---|---|---|
| | Bin0 | Bin1 | Bin2 | Bin3 | Bin4 | Bin5 | Bin6 | Bin7 |
| 0,1 | 1 | 2 | 0 | 0 | 0 | 0 | 0 | 0 |
| 2,3 | 1 | 2 | 3 | 3 | 0 | 0 | 0 | 0 |
| 4,5 | 1 | 2 | 3 | 3 | 3 | 0 | 0 | 0 |
| 6,7,8,9 | 1 | 2 | 3 | 3 | 3 | 0 | 0 | 0 |
| 10,11 | 1 | 2 | 3 | 3 | 3 | 0 | 0 | 0 |
| 12,13 | 1 | 2 | 3 | 3 | 3 | 0 | 0 | 0 |
| 14,15 | 1 | 2 | 3 | 3 | 3 | 0 | 0 | 0 |

Table 1 may be for a context set selected when the preceding coefficient group did not contain any greater-than-one coefficients.

Another example table is below for determining context based on position of the greater-than-one flag in the sequence and the position of the last non-zero coefficient in the coefficient group.

Table 2: Context selection for coding greater-than-one flags

| Position of the last NZ | Context selection for Gr1,(bin0 to bin7) | | | | | | | |
|---|---|---|---|---|---|---|---|---|
| | Bin0 | Bin1 | Bin2 | Bin3 | Bin4 | Bin5 | Bin6 | Bin7 |
| 0,1 | 1 | 0 | 0 | 0 | 0 | 0 | 0 | 0 |
| 2,3 | 1 | 2 | 0 | 0 | 0 | 0 | 0 | 0 |
| 4,5 | 1 | 2 | 3 | 0 | 0 | 0 | 0 | 0 |
| 6,7,8,9 | 1 | 2 | 3 | 3 | 0 | 0 | 0 | 0 |
| 10,11 | 1 | 2 | 3 | 0 | 0 | 0 | 0 | 0 |
| 12,13 | 1 | 2 | 0 | 0 | 0 | 0 | 0 | 0 |
| 14,15 | 1 | 0 | 0 | 0 | 0 | 0 | 0 | 0 |

Table 2 may be used, for example, in selecting a context from within a context set selected when the preceding coefficient group did contain at least one greater-than-one coefficients.

The foregoing tables are examples. In some cases, the context sets may contain more than four or fewer than four contexts.

Example syntax for one example implementation of the decoding process is detailed below. Inputs to this example process are the colour component index cIdx, the 16 coefficient subset index i, and the current coefficient scan index n within the current subset (e.g. coefficient group). Output of this process is the context selection, as indicated by the variable ctxIdxInc.

The variable ctxSet specifies the current context set. If n is equal to 15 or all previous syntax elements coeff_abs_level_greater1_flag[ pos ] with pos greater than n are derived to be equal to 0 instead of being explicitly parsed, then the variable ctxSet is determined as follows:

1. To initialize ctxSet, if the current subset index i is equal to 0 or cIdx is greater than 0, then ctxSet = 0. Otherwise (i is greater than 0 and cIdx is equal to 0), then ctxSet = 2.

2. When the subset i is not the first one to be processed in this transform unit, the following applies:

The variable numGreater1 is set equal to the variable numGreater1 that has been derived during the processing of the syntax element coeff_abs_level_greater2_flag for the subset i + 1.

When ( numGreater1 >> 1 ) is greater than 0, ctxSet is incremented by one.

If coeff_abs_level_greater1_flag[ n ] is not the first to be parsed within the current subset (i.e. coefficient group) then the variable ctxSet is set equal to the variable ctxSet derived or determined in connection with the preceding greater-than-one flag. The selection of a context from that context set is then made using the following process:

1. If ctxSet is 0 or 2, greater1Ctx is derived using gr1Ctx_0_2[] specified in Table 3 as follows:

$$greater1Ctx = gr1Ctx\_0\_2[idx]$$

where idx is the index (0...7) of the syntax element coeff_abs_level_greater1_flag in the current coefficient group.
2. Otherwise, greater1Ctx is derived using gr1Ctx_1_3[] specified in Table 4 as follows:

$$greater1Ctx = gr1Ctx\_1\_3[lastNZPosInCG][idx]$$

where lastNZPosInCG is the last nonzero position in coefficient group.

The context index increment ctxIdxInc is derived using the current context set ctxSet and the current context greater1Ctx as follows:

$$ctxIdxInc = ( ctxSet * 4 ) + Min( 3, greater1Ctx )$$

When cIdx is greater than 0, ctxIdxInc is modified as follows:

$$ctxIdxInc = ctxIdxInc + 16$$

The example tables used in this process for determining the variable greater1Ctx which is used to select the context from within the context set, are shown below.

Table 3: Specification of gr1Ctx_0_2[idx]

| idx | 0 | 1 | 2 | 3 | 4 | 5 | 6 | 7 |
|---|---|---|---|---|---|---|---|---|
| gr1Ctx_0_2[ idx ] | 1 | 2 | 3 | 3 | 3 | 0 | 0 | 0 |

Table 4: Specification of gr1Ctx_1_3[lastNZPosInCG][idx]

| | | idx | | | | | | | |
|---|---|---|---|---|---|---|---|---|---|
| | | - | 1 | 2 | 3 | 4 | 5 | 6 | 7 |
| Position of the last NZ | 0, 1, 14, 15 | 1 | 0 | 0 | 0 | 0 | 0 | 0 | 0 |
| | 2, 3, 12, 13 | 1 | 2 | 0 | 0 | 0 | 0 | 0 | 0 |
| | 4, 5, 10, 11 | 1 | 2 | 3 | 0 | 0 | 0 | 0 | 0 |
| | 6, 7, 8, 9 | 1 | 2 | 3 | 3 | 0 | 0 | 0 | 0 |

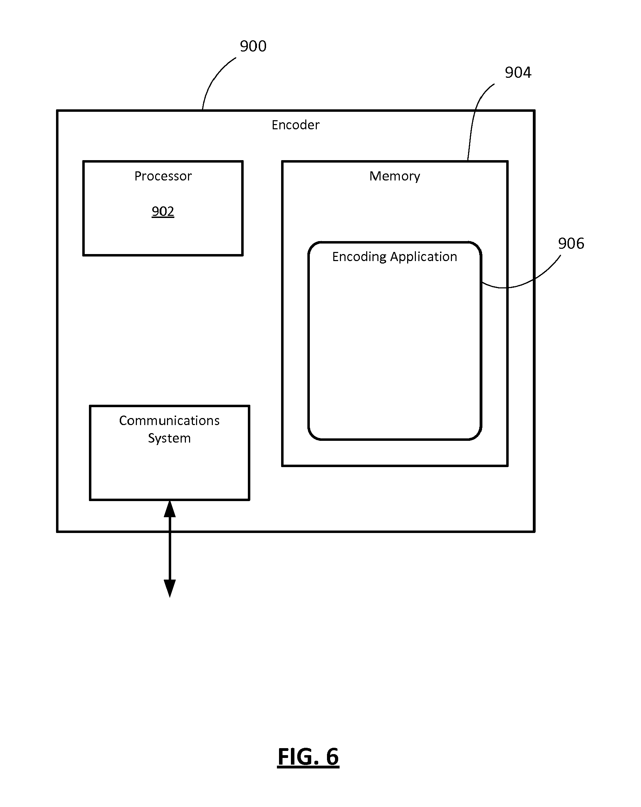

Reference is now made to Figure 6, which shows a simplified block diagram of an example embodiment of an encoder 900. The encoder 900 includes a processor 902, memory 904, and an encoding application 906. The encoding application 906 may include a computer program or application stored in memory 904 and containing instructions for configuring the processor 902 to perform operations such as those described herein. For example, the encoding application 906 may encode and output bitstreams encoded in accordance with the processes described herein. It will be understood that the encoding application 906 may be stored in on a computer readable medium, such as a compact disc, flash memory device, random access memory, hard drive, etc.

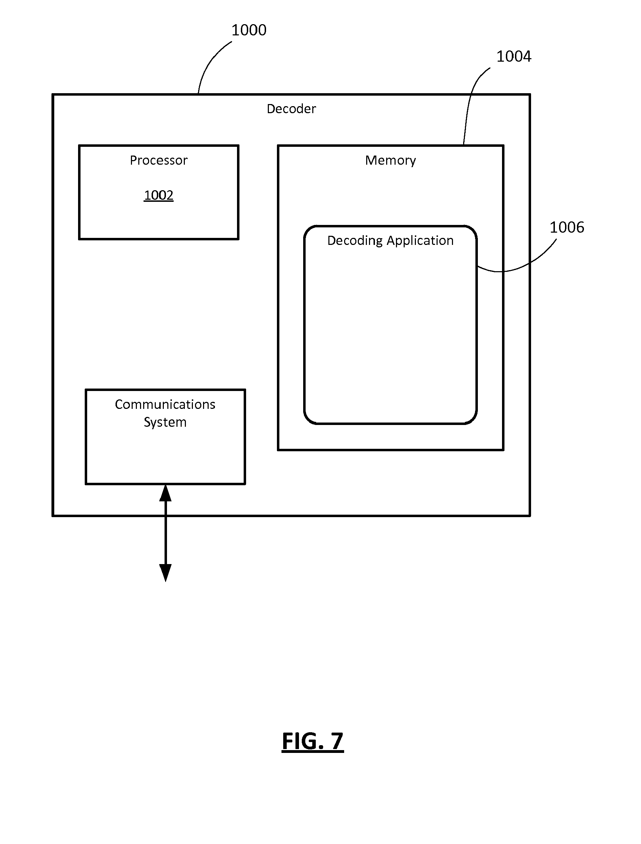

Reference is now also made to Figure 7, which shows a simplified block diagram of an example embodiment of a decoder 1000. The decoder 1000 includes a processor 1002, a memory 1004, and a decoding application 1006. The decoding application 1006 may include a computer program or application stored in memory 1004 and containing instructions for configuring the processor 1002 to perform operations such as those described herein. The decoding application 1006 may include an entropy decoder configured to reconstruct residuals based, at least in part, on reconstructing significant-coefficient flags, as described herein. It will be understood that the decoding application 1006 may be stored in on a computer readable medium, such as a compact disc, flash memory device, random access memory, hard drive, etc.

It will be appreciated that the decoder and/or encoder according to the present application may be implemented in a number of computing devices, including, without limitation, servers, suitably programmed general purpose computers, audio/video encoding and playback devices, set-top television boxes, television broadcast equipment, and mobile devices. The decoder or encoder may be implemented by way of software containing instructions for configuring a processor to carry out the functions described herein. The software instructions may be stored on any suitable non-transitory computer-readable memory, including CDs, RAM, ROM, Flash memory, etc.

It will be understood that the encoder described herein and the module, routine, process, thread, or other software component implementing the described method/process for configuring the encoder may be realized using standard computer programming techniques and languages. The present application is not limited to particular processors, computer languages, computer programming conventions, data structures, other such implementation details. Those skilled in the art will recognize that the described processes may be implemented as a part of computer-executable code stored in volatile or non-volatile memory, as part of an application-specific integrated chip (ASIC), etc.

Certain adaptations and modifications of the described embodiments can be made. Therefore, the above discussed embodiments are considered to be illustrative and not restrictive.

**Claims**

1. A method of reconstructing, in a video decoder, greater-than-one flags from a bitstream of encoded video data for a coefficient group in a transform unit, the method comprising:

    selecting a context set for decoding a sequence of greater-than-one flags for that coefficient group; and
    for each greater-than-one flag in the sequence,
    selecting a context within the selected context set based upon a position of that greater-than-one flag in the sequence, and
    decoding that greater-than-one flag from the encoded video data using the selected context.

2. The method claimed in claim 1, wherein the position is based on the number of greater-than-one flags previous to that greater-than-one flag in the sequence.

3. The method claimed in claim 1 or claim 2, wherein selecting a context within the selected context set is further based upon a position of a last significant coefficient in the coefficient group in a scan order.

4. The method claimed in claim 3, wherein selecting a context set comprises selecting a context set from among a plurality of context sets including a first context set and a second context set, and wherein a mapping of contexts in the first context set to the position of the greater-than-one flag and the position of the last significant coefficient is different from a mapping of contexts in the second context set.

5. The method claimed in any one of claims 1 to 4, wherein selecting a context within the selected context set is further based upon a count of non-zero coefficients in the coefficient group.

6. The method claimed in any one of claims 1 to 5, wherein selecting a context within the selected context set is further based upon a count of consecutive zeros preceding that greater-than-one flag in a scan order.

7. The method claimed in any one of claims 1 to 6, wherein selecting a context for each greater-than-one flag is performed in parallel for all greater-than-one flags in the sequence.

8. The method claimed in any one of claims 1 to 7, wherein selecting a context set comprises selecting the context set based on a count of greater-than-one flags decoded in reconstructing the preceding coefficient group.

9. The method claimed in any one of claims 1 to 7, wherein selecting a context set comprises selecting the context set based on the position of the coefficient group within the transform unit.

10. A video decoder for reconstructing greater-than-one flags from a bitstream of encoded video data for a coefficient group in a transform unit, the video decoder comprising:

   a processor;
   a memory; and
   a decoding application stored in memory and containing instructions for configuring the processor to perform the method claimed in any one of claims 1 to 9.

11. A method of encoding video data in a video encoder by encoding greater-than-one flags for a coefficient group in a transform unit, the method comprising:

   selecting a context set for encoding a sequence of greater-than-one flags for that coefficient group; and
   for each greater-than-one flag in the sequence,
   selecting a context within the selected context set based upon a position of that greater-than-one flag in the sequence, and
   encoding that greater-than-one flag from the encoded video data using the selected context.

12. A non-transitory processor-readable medium storing processor-executable instructions which, when executed, configures one or more processors to perform the method claimed in any one of claims 1 to 9 and 11.

**FIG. 1**

50

58

Frame Buffer

62

Motion
Compensator

14

54

56

57

Entropy
Decoder

Dequantizer

Inverse
Transform
Processor

Spatial
Compensator

Deblocking
Processor

16

52

60

**FIG. 2**

100

102

Select context set

Set idx = 0

104

106

Select context for decoding greater-than-one flag based on idx

108

Decode greater-than-one flag using on selected context

112

idx → idx + 1

No

110

Last Gr1 flag in CG?

Yes

End

**FIG. 3**

200

202 — Select context set

314 — For each greater-than-one flag in the sequence of greater-than-one flags, select a context from the context set based on the position of the greater-than-one flag in the sequence, and based on the position of the last significant coefficient in the scan order

208 — Decode the sequence of greater-than-one flags using the selected context(s)

**FIG. 4**

**FIG. 5**

900

904

Encoder

Processor

902

Memory

Encoding Application

906

Communications
System

**FIG. 6**

1000

1004

1006

Decoder

Processor

1002

Memory

Decoding Application

Communications
System

**FIG. 7**

Europäisches
Patentamt

European
Patent Office

Office européen
des brevets

# EUROPEAN SEARCH REPORT

Application Number

EP 13 15 7136

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | JI T ET AL: "Position-based Context Derivation of coeff_abs_level_greater1_flag Coding", 101. MPEG MEETING; 16-7-2012 - 20-7-2012; STOCKHOLM; (MOTION PICTURE EXPERT GROUP OR ISO/IEC JTC1/SC29/WG11),, no. m25582, 9 July 2012 (2012-07-09), XP030053916, * the whole document * | 1-4,11 | INV. H04N7/26 |
| X,P | JOEL SOLE ET AL: "Transform Coefficient Coding in HEVC", IEEE TRANSACTIONS ON CIRCUITS AND SYSTEMS FOR VIDEO TECHNOLOGY, IEEE SERVICE CENTER, PISCATAWAY, NJ, US, vol. 22, no. 12, 1 December 2012 (2012-12-01), pages 1765-1777, XP011487805, ISSN: 1051-8215, DOI: 10.1109/TCSVT.2012.2223055 * the whole document * | 1-12 | |
| A | KUMAKURA T ET AL: "Non-CE3: Simplified context derivation for significance map", 9. JCT-VC MEETING; 100. MPEG MEETING; 27-4-2012 - 7-5-2012; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-I0296, 17 April 2012 (2012-04-17), XP030112059, * the whole document * | 1-12 | TECHNICAL FIELDS SEARCHED (IPC)<br><br>H04N |

The present search report has been drawn up for all claims

| Place of search | Date of completion of the search | Examiner |
|---|---|---|
| Munich | 16 December 2013 | Barel-Faucheux, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................

& : member of the same patent family, corresponding
    document

EPO FORM 1503 03.82 (P04C01)

**REFERENCES CITED IN THE DESCRIPTION**

**Patent documents cited in the description**

- US 61666830 A